(19) Europäisches Patentamt
European Patent Office
Office européen des brevets

(11) **EP 3 162 672 A1**

(12) **EUROPEAN PATENT APPLICATION**
published in accordance with Art. 153(4) EPC

(43) Date of publication:
**03.05.2017 Bulletin 2017/18**

(51) Int Cl.:
**B62D 25/20** [(2006.01)]  **B62D 25/04** [(2006.01)]

(21) Application number: **15811708.5**

(22) Date of filing: **10.06.2015**

(86) International application number:
**PCT/JP2015/066768**

(87) International publication number:
**WO 2015/198867 (30.12.2015 Gazette 2015/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **26.06.2014 JP 2014131901**

(71) Applicant: **Nippon Steel & Sumitomo Metal
Corporation
Tokyo 100-8071 (JP)**

(72) Inventors:
• **YOSHIDA, Michitaka**
  **Tokyo 100-8071 (JP)**
• **TOMIZAWA, Atsushi**
  **Tokyo 100-8071 (JP)**
• **UEMATSU, Kazuo**
  **Tokyo 100-8071 (JP)**

(74) Representative: **Vossius & Partner
Patentanwälte Rechtsanwälte mbB
Siebertstrasse 3
81675 München (DE)**

(54) **STRUCTURAL MEMBER FOR AUTOMOBILE BODY**

(57)    A deformed part in a case in which the application of a collision load causes bending deformation in a structural member for an automobile body having a hardness distribution (strength distribution) composed of a quenched part, a base metal hardness part, and a transition part in a longitudinal direction is used as the base metal hardness part to avoid plastic strain concentration in the quenched part.

This structural member for an automobile body has a hollow steel main body having a rectangular cross section. The main body includes a quenched part, a base metal hardness part, and a transition part in this order, in at least a part thereof in an axial direction. The length (L) of the transition part as related to the axial direction satisfies the relationship of 0.006 (mm$^{-1}$) < LA/I ≤ 0.2 (mm$^{-1}$) in a case in which the cross-sectional area of the main body is (A) and the moment of inertia of area is (I).

FIG. 1

(a)

(b)

VICKERS HARDNESS Hv·5kgf

TRANSITION PART 12.5mm

MEASURED POSITION IN AXIAL DIRECTION /mm

EP 3 162 672 A1

**Description**

[Technical Field of the Invention]

The present invention relates to a structural member for an automobile body (hereinafter, also referred to as a "structural member").

[Related Art]

There have been demands for fuel efficiency enhancement of an automobile for prevention of global warming and further enhancement of safety of an automobile at the time of a collision accident. Therefore, reducing the thickness of a steel sheet for constituting a structural member by imparting a high tensile strength to the steel sheet, and appropriately securing target strength required for a structural member in each part have been promoted.

It is proposed that by partially quenching each part of a structural member in the axial direction (longitudinal direction), a quenched part with high strength which has been subjected to quenching, and a base metal hardness part which has not been subjected to quenching and has strength as low as the strength of the base metal are provided in the axial direction of the structural member (referred to as "partial quenching" in the present specification).

A center pillar reinforcement is disclosed in Patent Document 1. The center pillar reinforcement has a substantially hat-shaped cross section, and an induction hardened part that is formed to extend continuously from one end part to the other end part in an axial direction. The center pillar reinforcement has a hardness distribution in which "a central region between one end part and the other end part in the axial direction has high strength and the hardness gradually decreases from the central region to one end or the other end".

A reinforcement having both corners where a top plane part of a substantially hat-shaped cross section and side wall parts on both sides meet is disclosed in Patent Document 2. The reinforcement has an induction hardened part that is a chamfer part whose width is reduced toward the end parts. Parts other than the chamfer part are not quenched. Thus, the reinforcement has a desired strength distribution.

An automobile member produced by welding of a reinforcement of an automobile member by direct energization heating (direct resistance heating) of high frequency induction heating under predetermined conditions is disclosed in Patent Document 3. The reinforcement has a substantially hat-shaped cross section formed by pressing a material having a predetermined chemical composition.

Further, a pillar in which a heat treated part that is formed on a peripheral wall having a substantially hat-shaped cross section is composed of a group of plural hardened strip parts is disclosed in Patent Document 4. Each of the hardened strip parts is formed to extend in a longitudinal direction of the peripheral wall. The hardened strips are made different from one another in length so that a main quenching region and a gradually hardness changing region are formed. In the main quenching region, a ratio of the area of the hardened strip parts occupied in a unit area of the peripheral wall is larger than a ratio of the area of the hardened strip parts occupied in other parts of the peripheral wall in the longitudinal direction. In the gradually hardness changing region, the ratio of the area occupied by the hardened strip parts is reduced as the strips recede from the main quenching region to the peripheral wall in the longitudinal direction. Thus, a reinforcement structure capable of increasing the strength of a vehicle body skeleton member such as a pillar and making the reinforcement structure hard to be bent is provided.

The applicant discloses inventions for producing a partially quenched structural member having a bent part in Patent Documents 5 and 6. In these inventions, while a material having a closed cross section (for example, a steel pipe) is being fed in an axial direction thereof, the material is heated to a temperature of $Ac_3$ point or higher using an annular high frequency induction heating coil. By rapidly cooling the material by a water cooling device immediately after the heating, the quenched hardened region can be formed. In addition, by applying a bending moment or a shear load to a part of the material to be heated, a partially quenched member having a bent part is produced (hereinafter, this production method is referred to as "3DQ").

The quenched part and the base metal hardness part of the produced member in the axial direction can be formed side by side by appropriately adjusting the heating temperature of the material by a high frequency induction heating coil in 3DQ or the cooling rate of the material by a cooling device in 3DQ.

It is expected that when bending deformation occurs due to the application of a collision load, a base metal hardness part having a low strength is bent and deformed to absorb collision energy and the quenched part having a high strength secures load resistant performance in a structural member for an automobile body having such a hardness distribution.

[Prior Art Document]

[Patent Documents]

[Patent Document 1] Japanese Unexamined Patent Application, First Publication No. H10-17933
[Patent Document 2] Japanese Unexamined Patent Application, First Publication No. 2003-48567
[Patent Document 3] Japanese Unexamined Patent Application, First Publication No. 2004-323967
[Patent Document 4] Japanese Unexamined Patent Application, First Publication No 2012-131326
[Patent Document 5] Japanese Unexamined Patent Application, First Publication No. 2007-83304
[Patent Document 6] Japanese Unexamined Patent Application, First Publication No. 2012-25335

[Disclosure of the Invention]

[Problems to be Solved by the Invention]

When a collision load is applied to a structural member produced by 3DQ, bending deformation (or formation of bucking wrinkles) easily occurs in a part where a difference in strength is large like between a quenched part and an unquenched part and strength rapidly changes. Therefore, strain concentration easily occurs in this part. However, actually, a part where strength changes (hereinafter, referred to as a "transition part") is surely present between a quenched part and an unquenched part in an axial direction.
The present inventors found new problems that in a case in which the length of a transition part in an axial direction is short,

(i) high plastic strain is generated by buckling wrinkles in a quenched part having low ductility at the initial stage of collision and
(ii) therefore, at the initial stage of collision, there is a growing risk of a structural member being broken at an early stage from the quenched part as a starting point.

The effect of partial quenching capable of obtaining both high collision energy absorption performance and high load resistance performance is attenuated when a structural member is broken from a quenched part, as a starting point, at an early stage.
Patent Documents 1 to 4 disclose formation of a hardness distribution (strength distribution) in a structural member. However, a transition part is not disclosed in Patent Documents 1 to 4. Therefore, the above new problems and means for solving the problems are not disclosed in Patent Documents 1 to 4.
In addition, Patent Documents 1 to 4 disclose structural members having a hat-shaped cross section. However, structural members having a closed rectangular cross section, a circular cross section, and a polygonal cross section are present. Whether or not the inventions disclosed in Patent Documents 1 to 4 can be applied to structural members having cross sections other than a hat-shaped cross section is not disclosed in Patent Documents 1 to 4. Therefore, whether or not the use of structural members having these cross sections can solve the problems is not clear.
The present invention is made in consideration of the problems of the related art. An object of the present invention is to provide a structural member for an automobile body capable of preventing breaking in a quenched part caused by application of high plastic strain and thus attaining both high collision energy absorption performance and high load resistance performance when a structural member for an automobile body having a hardness distribution (strength distribution) composed of a quenched part, a transition part, and a base metal hardness part in an axial direction (longitudinal direction) is bent and deformed by the application of a collision load.

[Means for Solving the Problem]

The present invention is described as follows.

(1) A structural member for an automobile body including: a hollow steel main body having a closed cross section, in which the main body includes, in an axial direction, a quenched part which is subjected to quenching, a base metal hardness part which has the same hardness as the hardness of a base metal, and a transition part which is provided between the quenched part and the base metal hardness part in the axial direction and is formed such that strength changes from the strength of the base metal hardness part to the strength of the quenched part, and in a case in which a cross-sectional area of the main body is A ($mm^2$) and a moment of inertia of area of the main body is I (mm⁴), a length L (mm) of the transition part in the axial direction satisfies the relationship of the following equation (1).

$$0.006 \ (\text{mm}^{-1}) < \text{LA/I} \leq 0.2 \ (\text{mm}^{-1}) \qquad \dots \ (1)$$

(2) The structural member for an automobile body according to (1), in which a tensile strength of the base metal hardness part is 700 MPa or less and a tensile strength of the quenched part is 1470 MPa or more.

(3) The structural member for an automobile body according to (1) or (2), in which respective hardness distributions of the quenched part, the base metal hardness part, and the transition part in the vertical cross section to the axial direction are substantially constant.

(4) The structural member for an automobile body according to any one of (1) to (3), further including: a to-be welded part which is provided in the base metal hardness part or the transition part and is to be welded to another structural member for an automobile body.

(5) The structural member for an automobile body according to any one of (1) to (4), in which the closed cross section of the main body is free of an outwardly-extending flange.

[Effects of the Invention]

According to the present invention, it is possible to make strain concentrate in a base metal hardness part having ductility to cause deformation in a case in which bending deformation occurs in a structural member for an automobile body due to the application of a collision load. Accordingly, it is possible to provide a structural member for an automobile body having both high collision energy absorption performance and high load resistance performance.

[Brief Description of the Drawings]

FIG. 1(a) is a dihedral view in the vicinity of a transition part of a structural member according to the present invention and FIG. 1(b) is a graph showing an example of hardness of a quenched part, a transition part, and a base metal hardness part.

FIG. 2(a) to FIG. 2(c) are illustrations showing analysis conditions by a finite element method, FIG. 2(a) and FIG. 2(b) show shapes of assumed structural members, and FIG. 2(c) shows a FEM analysis model created regarding portions surrounded by a dotted line in FIG. 2(a) and FIG. 2(b).

FIG. 3(a) to FIG. 3(c) are illustrations showing cross sections of analyzed structural members (cross sections taken along line A-A' in FIG. 2(c)).

FIG. 4 is a graph showing analysis cases (quenching patterns).

FIG. 5(a) is a perspective view showing an analyzed structural member, FIG. 5(b) is a graph showing deformation in cross sections A and B at the time point when a displacement of 0 point shown in FIG. 5(a) in a Z direction is 100 mm in comparison of CASE-1 and CASE-2 to CASE-4, and FIG. 5(c) is a graph showing deformation in cross sections A and B in comparison of CASE-1 and CASE-5 and CASE-6.

FIG. 6 is a graph showing a relationship between a relationship (LA/I) represented by a length L of a transition part in an axial direction, a cross-sectional area A of a main body, and a moment of inertia of area I, and the maximum ratio of equivalent plastic strain.

FIG. 7(a) and FIG. 7(b) are illustrations showing a welding part of the structural member according to the present invention and another structural member (mounting member).

[Embodiments of the Invention]

A structural member according to the present invention will be described.

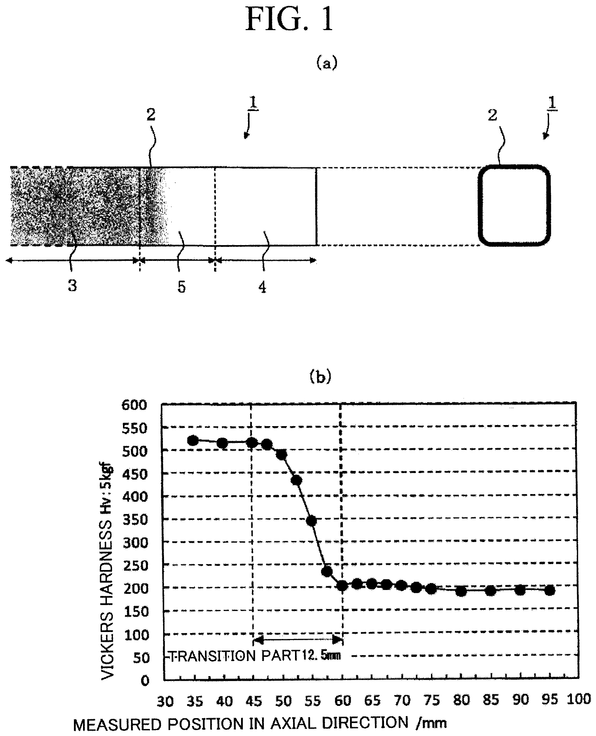

FIG. 1(a) is a dihedral view in the vicinity of a transition part 5 of a structural member 1 according to the present invention, and FIG. 1(b) is a graph showing an example of hardness of a quenched part, a transition part, and a base metal hardness part.

As shown in FIG. 1(a), the structural member 1 has a main body 2. For example, a front side member, a side sill, an A pillar, a C pillar, a roof rail reinforcement, a chassis component, and the like constituting an automobile body are exemplified as the structural member 1.

As shown in FIG. 1(a), the main body 2 is a hollow steel member having a closed cross section. Examples of the closed cross section include a rectangular cross section shown in FIG. 1(a) as an example, a circular cross section, and a polygonal cross section. As shown in FIG. 1(a), when weight reduction is facilitated by thickness reduction by forming the main body 2 with a high strength material and the main body is free of an outwardly-extending flange, the rigidity is secured by increasing the size of the cross section and thus this case is desirable.

The main body 2 includes a quenched part 3 which is subjected to quenching, a base metal hardness part 4, and a transition part 5 in at least a part thereof in an axial direction. The base metal hardness part 4 has the same hardness as the hardness of the base metal before quenching. The transition part 5 is provided between the quenched part 3 and the base metal hardness part 4 in the axial direction. The strength of the transition part 5 gradually changes from the strength of the base metal hardness part 4 to the strength of the quenched part 3. That is, the main body 2 includes the quenched part 3, the base metal hardness part 4, and the transition part 5 which are arranged in this order in the axial direction.

The tensile strength of the base metal hardness part 4 is desirably 700 MPa or less, and the tensile strength of the quenched part 3 is desirably 1470 MPa or more.

When the tensile strength of the base metal hardness part 4 is set to 700 MPa or less, collision energy can be absorbed by deformation by itself at the time of application of a collision load, and the difference in strength can be increased by quenching. Thus, the degree of freedom in designing is enhanced.

When the tensile strength of the quenched part 3 is set to 1470 MPa or more, the deformation resistant performance can be enhanced at a location where deformation has to be prevented at the time of application of a collision load, and the collision resistance strength can be enhanced. Thus, the effect of weight reduction by thickness reduction is expected.

It is desirable that hardness distributions in the respective cross sections of the quenched part 3, the base metal hardness part 4, and the transition part 5 vertical to the axial direction are substantially constant.

The flexural rigidity (EI) of the main body 2 may be sufficient as long as the main body has flexural rigidity applicable as an automobile structural member, and for example, the flexural rigidity is $2.97 \times 10^5$ ($Nm^2$) or less.

Means for forming the quenched part 3, the transition part 5, and the base metal hardness part 4 to be arranged in this order in the axial direction of the main body 2 is not limited to a particular means. It is desirable to produce by the above-described 3DQ from the viewpoint of productivity, and accurately and simply forming the quenched part 3, the transition part 5, and the base metal hardness part 4 within a desirable range.

Specifically, a partially quenched member having a bent part is produced by, while feeding a base metal having a closed cross section, such as a steel pipe, in the axial direction thereof, heating the base metal to a temperature of $Ac_3$ point or higher by an annular high frequency induction heating coil, and rapidly cooling the heated base metal by a water cooling device immediately after applying a bending moment or a shearing force to the high temperature part.

At this time, by appropriately adjusting the heating temperature of the base metal by the high frequency induction heating coil and the cooling rate of the base metal by a water cooling device, the quenched part 3, the transition part 5, and the base metal hardness part 4 can be arranged in this order in the axial direction of the produced member and formed in a desired range.

In the case in which the main body 2 is produced by 3DQ, by increasing the feeding rate of the base metal or reducing or increasing the amount of cooling water, the length of the transition part 5 in the axial direction can be controlled. However, when the feeding rate of the base metal, the amount of cooling water, and the current of the high frequency induction heating coil are collectively controlled, the hardness of the member in the axial direction is prevented from being uneven and the length of the transition part 5 in the axial direction is stably adjusted. Thus, this case is preferable.

Further, the hardness distribution in each surface of the member in the axial direction can be made even by controlling the amount of water by the cooling device on each side of the member, and stable characteristics are obtained in each member.

The structural member 1 is usually welded to another structural member. The welding is desirably carried out in the base metal hardness part 4 or the transition part 5. In other words, a to-be-welded part to be welded to another structural member in the structural member 1 is desirably the base metal hardness part 4 or the transition part 5. Accordingly, the difference in strength resulting from HAZ softening is prevented, and thus strain concentration is relatively prevented in a softened part at the time of deformation caused by the application of a collision load.

The length L (mm) of the transition part 5 in the axial direction satisfies the relationship of 0.006 ($mm^{-1}$) < LA/I ≤ 0.2 ($mm^{-1}$) in the case in which the cross-sectional area of the main body 2 is A ($mm^2$) and a moment of inertia of area is I ($mm^4$). The reason will be described while referring to the analysis result of the finite element method (hereinafter, FEM).

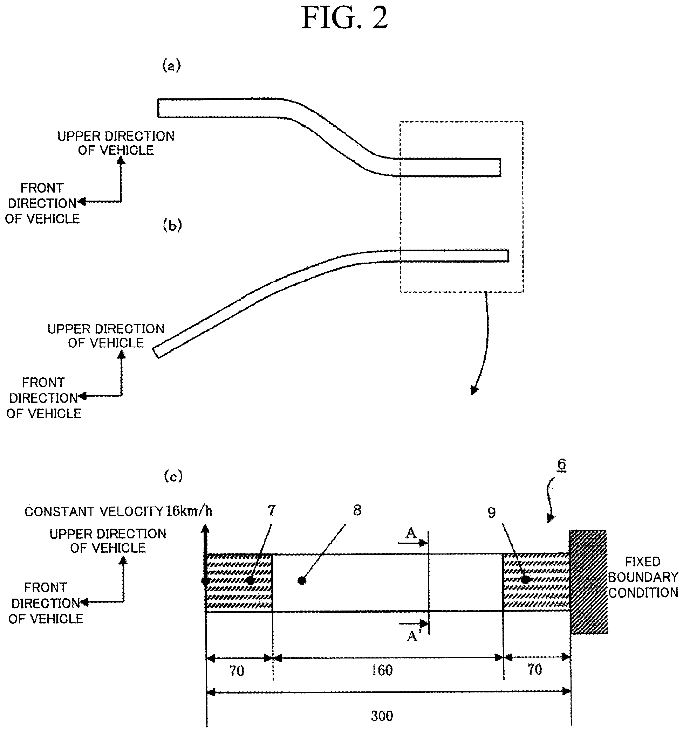

FIG. 2(a) to FIG. 2(c) are illustrations showing analysis conditions in FEM, FIG. 2(a) and FIG 2(b) show shapes of assumed structural members, and FIG. 2(c) shows a FEM analysis model created regarding portions surrounded by a dotted line in FIG. 2(a) and FIG 2(b).

As the structural member, a front side member shown in FIG. 2(a) or an A pillar shown in FIG. 2(b) are assumed.

In addition, a member 6 (FEM analysis model) shown in FIG. 2(c) in which a quenched part 7, a base metal hardness part 8, and a quenched part 9 are formed to be arranged in an axial direction is assumed as a model, and a transition part is not present. In the analysis, the member 6 in which a transition part is not present is used as a base to investigate the effect of the present invention. The dimension of each part of the member 6 is as shown in FIG. 2(c) (in the unit of mm).

As shown in FIG. 2(c), the analysis is carried out under the condition that one end on the side close to the quenched part 9 in the member 6 is completely constrained, and the other end on the side close to the quenched part 7 is displaced toward the upper direction of the vehicle at a constant velocity of 16 km/h to cause bending deformation in the member 6.

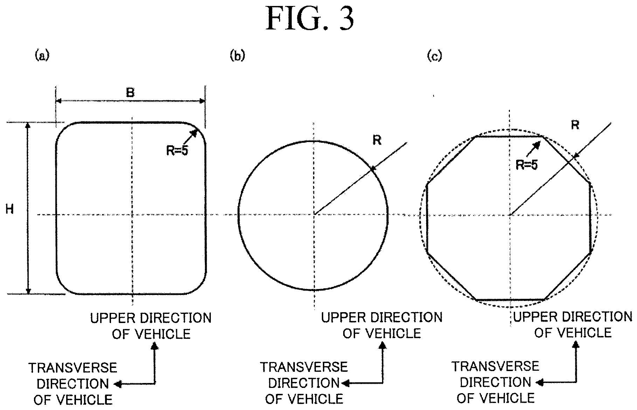

FIG. 3(a) to FIG. 3(c) are illustrations showing cross sections of analyzed structural members (cross sections taken along line A-A' in FIG. 2(c)) and showing a thickness center position of the member.

Three types of cross sections to be analyzed are a rectangular cross section shown in FIG. 3(a), a circular cross section shown in FIG. 3(b), and an octagonal cross section shown in FIG. 3(c) and analysis was carried out using each cross section dimension and thicknesses shown in Table 1.

[Table 1]

| Cross section | Cross section size (sheet thickness center) | Sheet thickness |
|---|---|---|
| (a) Rectangle | B = 40 mm, H = 46 mm | 1.2 mm, 1.6 mm |
| | B = 60 mm, H = 120 mm | 1.2 mm,1.6 mm, 2.0 mm |
| (b) Circle | Radius R = 28 mm | 1.2 mm, 1.6 mm |
| | Radius R = 57 mm | 1.2 mm, 1.6 mm, 2.0 mm |
| (c) Octagon | Circumscribed circle radius R = 28.7 mm | 1.2 mm, 1.6 mm |
| | Circumscribed circle radius R = 57 mm | 1.2 mm, 1.6 mm, 2.0 mm |

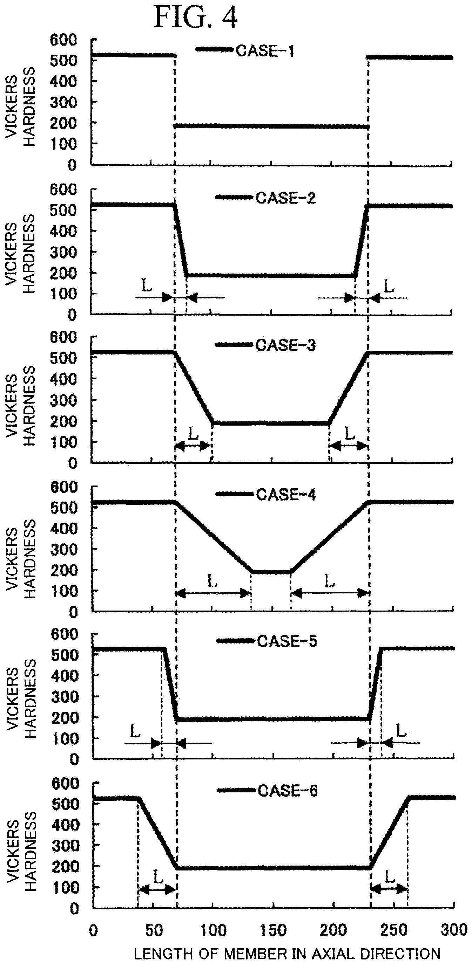

Analysis cases (quenching patterns) are collectively shown in FIG. 4 and Table 2.

[Table 2]

| Reference symbol | Transition part length L [mm] |
|---|---|
| CASE-1 | 0 |
| CASE-2 | 10 |
| CASE-3 | 32 |
| CASE-4 | 64 |
| CASE-5 | 10 |
| CASE-6 | 32 |

CASE-1 (base) is the above-described assumed model in which regions at 70 mm from the both end parts of the member are set as quenching parts, a center part 160 mm of the member excluding the two quenching parts is set as a base metal hardness part, and a transition part is not present.

CASE-2 is a model in which regions at 70 mm from the both end parts of the member are set as quenching parts, a center part 140 mm of the member is set as a base metal hardness part, and transition parts having a length L of 10 mm are provided between the quenched parts and the base metal hardness part.

CASE-3 is a model in which regions at 70 mm from the both end parts of the member are set as quenching parts, a center part 96 mm of the member is set as a base metal hardness part, and transition parts having a length L of 32 mm are provided between the quenched parts and the base metal hardness part.

CASE-4 is a model in which regions at 70 mm from the both end parts of the member are set as quenching parts, a center part 32 mm of the member is set as a base metal hardness part, and transition parts having a length L of 64 mm are provided between the quenched parts and the base metal hardness part.

CASE-5 is a model in which regions at 60 mm from the both end parts of the member are set as quenching parts, a center part 160 mm of the member is set as a base metal hardness part, and transition parts having a length L of 10 mm are provided between the quenched parts and the base metal hardness part.

Further, CASE-6 is a model in which regions at 38 mm from the both end parts of the member are set as quenching parts, a center part 160 mm of the member is set as a base metal hardness part, and transition parts having a length L of 32 mm are provided between the quenched parts and the base metal hardness part.

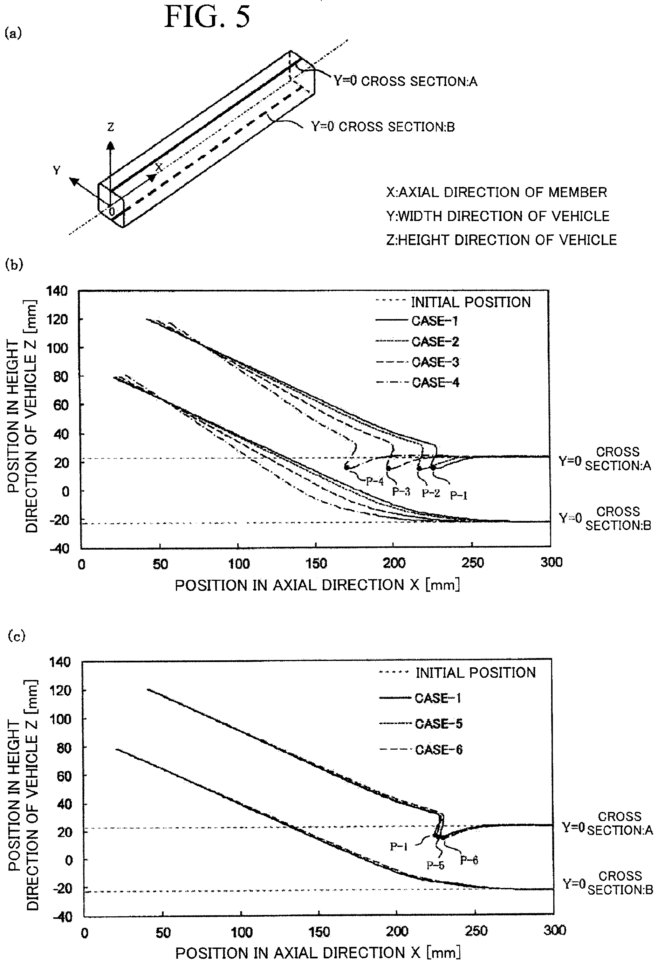

FIG. 5(a) shows a perspective view of the analyzed member, cross sections A and B of the member, FIG. 5(b) is a graph showing deformation of cross sections A and B when a displacement of 0 point shown in FIG. 5(a) in Z direction is 100 mm in comparison of CASE-1 and CASE-2 to CASE-4, and FIG. 5(c) is a graph showing deformation of cross sections A and B in comparison of CASE-1, and CASE-5 and CASE-6.

The result shown in FIG. 5 is a result of a model having the rectangular cross section shown in FIG. 3(a) and having a cross section dimension of B = 40 mm, H = 46 mm, and a sheet thickness of 1.6 mm.

As shown in CASE-2 to CASE-4 in the graph in FIG. 5(b), as the length of the transition part in the axial direction becomes longer, a deformation position P-1 of CASE-1 can be moved to the side close to the base metal hardness part, that is, to the side in which ductility is higher (P-2, P-3, and P-4). Therefore, it is possible to prevent deformation from occurring in the quenched part and to reduce a breaking risk in the main body.

In addition, when models are made as shown in CASE-5 and CASE-6 in the graph in FIG. 5(c), deformation positions P-5 and P-6 can be set to the deformation position P-1 as in CASE-1, and it is possible to prevent deformation from occurring in the quenched part and to reduce a breaking risk in the main body by increasing the length of the transition part as in CASE-2 to CASE-4.

In Tables 3 to 5, the results of analyzing all models are collectively shown. In Tables 3 to 5, the deformation position is evaluated such that when deformation starts at a position away from the end of the quenched part, the position is evaluated as "good", and when deformation does not start at a position away from the end of the quenched part, the position is evaluated as "no good".

[Table 3]

| Size [mm] | Sheet thickness [mm] | Shape reference symbol | EI [Nm$^2$] | Quenching pattern | L [mm] | Deformation position | LA/l [1/mm] | Ratio of equivalent plastic strain | Remarks |
|---|---|---|---|---|---|---|---|---|---|
| B = 40<br>H=46 | 1.2 | (a)-1-1.2t | 1.705 × 10$^4$ | CASE-1 | 0 | no good | 0.0000 | 1.000 | Comparative Example |
| | | | | CASE-2 | 10 | good | 0.0237 | 0.193 | Invention Example |
| | | | | CASE-3 | 32 | good | 0.0758 | 0.067 | |
| | | | | CASE-4 | 64 | good | 0.1516 | 0.658 | |
| | | | | CASE-5 | 10 | good | 0.0237 | 0.191 | |
| | | | | CASE-6 | 32 | good | 0.0758 | 0.059 | |
| | 1.6 | (a)-1-1.6t | 2.274 × 10$^4$ | CASE-1 | 0 | no good | 0.0000 | 1.000 | Comparative Example |
| | | | | CASE-2 | 10 | good | 0.0237 | 0.171 | Invention Example |
| | | | | CASE-3 | 32 | good | 0.0758 | 0.062 | |
| | | | | CASE-4 | 64 | good | 0.1515 | 0.675 | |
| | | | | CASE-5 | 10 | good | 0.0237 | 0.173 | |
| | | | | CASE-6 | 32 | good | 0.0758 | 0.046 | |
| | 1.2 | (a)-2-1.2t | 1.438 × 10$^5$ | CASE-1 | 0 | no good | 0.0000 | 1.000 | Comparative Eample |
| | | | | CASE-2 | 10 | good | 0.0060 | 1.033 | Invention Example |
| | | | | CASE-3 | 32 | good | 0.0193 | 0.322 | |
| | | | | CASE-4 | 64 | good | 0.0387 | 0.042 | |
| | | | | CASE-5 | 10 | good | 0.0060 | 1.026 | |
| | | | | CASE-6 | 32 | good | 0.0193 | 0.181 | |

EP 3 162 672 A1

8

(continued)

| Size [mm] | Sheet thickness [mm] | Shape reference symbol | EI [Nm²] | Quenching pattern | L [mm] | Deformation position | LA/l [1/mm] | Ratio of equivalent plastic strain | Remarks |
|---|---|---|---|---|---|---|---|---|---|
| B = 60 H = 120 | 1.6 | (a)-2-1.6t | $1.917 \times 10^5$ | CASE-1 | 0 | no good | 0.0000 | 1.000 | Comparative Example |
| | | | | CASE-2 | 10 | good | 0.0060 | 1.001 | Invention Example |
| | | | | CASE-3 | 32 | good | 0.0193 | 0.176 | |
| | | | | CASE-4 | 64 | good | 0.0386 | 0.165 | |
| | | | | CASE-5 | 10 | good | 0.0060 | 0.945 | |
| | | | | CASE-6 | 32 | good | 0.0193 | 0.150 | |
| | 2.0 | (a)-2-2.0t | $2.397 \times 10^5$ | CASE-1 | 0 | no good | 0.0000 | 1.000 | Comparative Example |
| | | | | CASE-2 | 10 | good | 0.0060 | 0.930 | Invention Example |
| | | | | CASE-3 | 32 | good | 0.0193 | 0.200 | |
| | | | | CASE-4 | 64 | good | 0.0386 | 0.174 | |
| | | | | CASE-5 | 10 | good | 0.0060 | 1.077 | |
| | | | | CASE-6 | 32 | good | 0.0193 | 0.153 | |

[Table 4]

| Size [mm] | Sheet thickness [mm] | Shape reference symbol | EI [Nm$^2$] | Quenching pattern | L [mm] | Deformation position | LA/l [1/mm] | Ratio of equivalent plastic strain | Remarks |
|---|---|---|---|---|---|---|---|---|---|
| R=28 | 1.2 | (b)-1-1.2t | 1.446 × 10$^4$ | CASE-1 | 0 | no good | 0.0000 | 1.000 | Comparative Example |
| | | | | CASE-2 | 10 | good | 0.0300 | 0.603 | Invention Example |
| | | | | CASE-3 | 32 | good | 0.0961 | 0.431 | |
| | | | | CASE-4 | 64 | good | 0.1923 | 0.468 | |
| | | | | CASE-5 | 10 | good | 0.0300 | 0.631 | |
| | | | | CASE-6 | 32 | good | 0.0961 | 0.552 | |
| | 1.6 | (b)-1-1.6t | 1.929 × 10$^4$ | CASE-1 | 0 | no good | 0.0000 | 1.000 | Comparative Example |
| | | | | CASE-2 | 10 | good | 0.0300 | 0.540 | Invention Example |
| | | | | CASE-3 | 32 | good | 0.0961 | 0.416 | |
| | | | | CASE-4 | 64 | good | 0.1923 | 0.431 | |
| | | | | CASE-5 | 10 | good | 0.0300 | 0.635 | |
| | | | | CASE-6 | 32 | good | 0.0961 | 0.687 | |
| | 1.2 | (b)-2-1.2t | 1.779 × 10$^3$ | CASE-1 | 0 | no good | 0.0000 | 1.000 | Comparative Example |
| | | | | CASE-2 | 10 | good | 0.0050 | 0.882 | Invention Example |
| | | | | CASE-3 | 32 | good | 0.0159 | 0.376 | |
| | | | | CASE-4 | 64 | good | 0.0318 | 0.399 | |
| | | | | CASE-5 | 10 | good | 0.0050 | 0.859 | |
| | | | | CASE-6 | 32 | good | 0.0159 | 0.959 | |

| Size [mm] | Sheet thickness [mm] | Shape reference symbol | EI [Nm²] | Quenching pattern | L [mm] | Deformation position | LA/l [1/mm] | Ratio of equivalent plastic strain | Remarks |
|---|---|---|---|---|---|---|---|---|---|
| R = 57.5 | 1.6 | (b)-2-1.6t | $2.372 \times 10^5$ | CASE-1 | 0 | no good | 0.0000 | 1.000 | Comparative Example |
| | | | | CASE-2 | 10 | good | 0.0050 | 0.878 | Invention Example |
| | | | | CASE-3 | 32 | good | 0.0159 | 0.381 | |
| | | | | CASE-4 | 64 | good | 0.0318 | 0.311 | |
| | | | | CASE-5 | 10 | good | 0.0050 | 0.893 | |
| | | | | CASE-6 | 32 | good | 0.0159 | 0.512 | |
| | 2.0 | (b)-2-2.0t | $2.965 \times 10^5$ | CASE-1 | 0 | no good | 0.0000 | 1.000 | Comparative Example |
| | | | | CASE-2 | 10 | good | 0.0050 | 0.577 | Invention Example |
| | | | | CASE-3 | 32 | good | 0.0159 | 0.510 | |
| | | | | CASE-4 | 64 | good | 0.0318 | 0.372 | |
| | | | | CASE-5 | 10 | good | 0.0050 | 0.555 | |
| | | | | CASE-6 | 32 | good | 0.0159 | 0.319 | |

[Table 5]

| Size [mm] | Sheet thickness [mm] | Shape reference symbol | EI [Nm²] | Quenching pattern | L [mm] | Deformation position | LA/I [1/mm] | Ratio of equivalent plastic strain | Remarks |
|---|---|---|---|---|---|---|---|---|---|
| R=28.7 | 1.2 | (c)-1-1.2t | $1.614 \times 10^4$ | CASE-1 | 0 | no good | 0.0000 | 1.000 | Comparative Example |
| | | | | CASE-2 | 10 | good | 0.0266 | 0.249 | Invention Example |
| | | | | CASE-3 | 32 | good | 0.0852 | 0.182 | |
| | | | | CASE-4 | 64 | good | 0.1703 | 0.523 | |
| | | | | CASE-5 | 10 | good | 0.0266 | 0.259 | |
| | | | | CASE-6 | 32 | good | 0.0852 | 0.239 | |
| | 1.6 | (c)-1-1.6t | $2.151 \times 10^4$ | CASE-1 | 0 | no good | 0.0000 | 1.000 | Comparative Example |
| | | | | CASE-2 | 10 | good | 0.0266 | 0.188 | Invention Example |
| | | | | CASE-3 | 32 | good | 0.0852 | 0.141 | |
| | | | | CASE-4 | 64 | good | 0.1703 | 0.542 | |
| | | | | CASE-5 | 10 | good | 0.0266 | 0.221 | |
| | | | | CASE-6 | 32 | good | 0.0852 | 0.233 | |
| | 1.2 | (c)-2-1.2t | $1.264 \times 10^5$ | CASE-1 | 0 | no good | 0.0000 | 1.000 | Comparative Example |
| | | | | CASE-2 | 10 | good | 0.0068 | 0.633 | Invention Example |
| | | | | CASE-3 | 32 | good | 0.0217 | 0.285 | |
| | | | | CASE-4 | 64 | good | 0.0434 | 0.317 | |
| | | | | CASE-5 | 10 | good | 0.0068 | 0.768 | |
| | | | | CASE-6 | 32 | good | 0.0217 | 0.348 | |

(continued)

| Size [mm] | Sheet thickness [mm] | Shape reference symbol | EI [Nm$^2$] | Quenching pattern | L [mm] | Deformation position | LA/I [1/mm] | Ratio of equivalent plastic strain | Remarks |
|---|---|---|---|---|---|---|---|---|---|
| R = 57 | 1.6 | (c)-2-1.6t | 1.685 × 10$^3$ | CASE-1 | 0 | no good | 0.0000 | 1.000 | Comparative Example |
| | | | | CASE-2 | 10 | good | 0.0068 | 0.918 | Invention Example |
| | | | | CASE-3 | 32 | good | 0.0217 | 0.335 | |
| | | | | CASE-4 | 64 | good | 0.0434 | 0.456 | |
| | | | | CASE-5 | 10 | good | 0.0068 | 0.919 | |
| | | | | CASE-6 | 32 | good | 0.0217 | 0.288 | |
| | 2.0 | (c)-2-2.0t | 2.107 × 10$^5$ | CASE-1 | 0 | no good | 0.0000 | 1.000 | Comparative Example |
| | | | | CASE-2 | 10 | good | 0.0068 | 0.349 | Invention Example |
| | | | | CASE-3 | 32 | good | 0.0217 | 0.101 | |
| | | | | CASE-4 | 64 | good | 0.0434 | 0.310 | |
| | | | | CASE-5 | 10 | good | 0.0068 | 0.383 | |
| | | | | CASE-6 | 32 | good | 0.0217 | 0.201 | |

As shown in Tables 3 to 5, even when the cross section is any of the rectangular cross section shown in FIG. 3(a), the circular cross section shown in FIG. 3(b), and the octagonal cross section shown in FIG. 3(c), and the cross section dimension is any of cross section sizes (sheet thickness center) shown in Table 1, furthermore, the sheet thickness is any of 1.2, 1.6 mm, and 2.0 mm, the same deformation modes as the deformation modes as shown in FIG. 5 were shown and the deformation positions in all CASE-2 to CASE-6 were evaluated as "good".

The above description relates to a deformation starting point. When deformation proceeds and buckling wrinkles are significant, significant deformation occurred in the quenched part and thus the maximum value of equivalent plastic strain in each case was investigated.

The maximum value of equivalent plastic strain is a maximum value of equivalent plastic strain which occurs in the quenched part when a displacement of 100 mm in a height direction of the vehicle occurs, and is evaluated as a ratio obtained by dividing a maximum value of equivalent plastic strain by the maximum value in CASE-1 (base). In Table 3 to 5, the rate (hereinafter, also referred to as a "ratio of equivalent plastic strain") is shown.

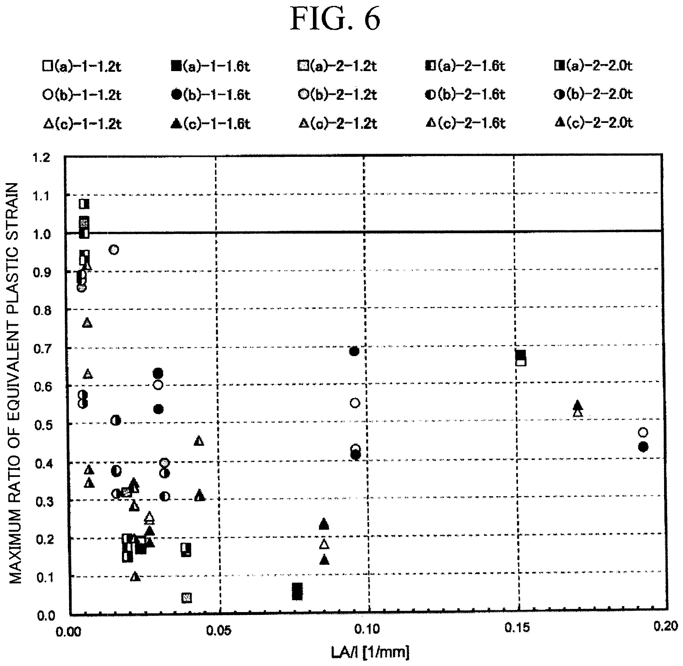

FIG. 6 is a graph showing a relationship between a relationship (LA/I) represented by a length L of a transition part in an axial direction, a cross-sectional area A of a main body, and a moment of inertia of area I, and the maximum ratio of equivalent plastic strain.

As shown in the graph of FIG. 6, it is found that as the ratio (LA/I) increases, the maximum ratio of equivalent plastic strain tends to decrease. There is a case in which the ratio of equivalent plastic strain in the quenched part by proceeding of formation of buckling wrinkles is greater than 1 as the ratio (LA/I) decreases. Therefore, in the present invention, the relationship of (LA/I) > 0.006 (1/mm) is satisfied.

In contrast, when the ratio (LA/I) increases, the length L of the transition part is increased. Thus, there are risks of not only saturating the effect but also deteriorating load resistance characteristics and further, the control for forming a stable transition part is difficult. Therefore, in the present invention, the relationship of LA/I ≤ 0.2 (1/mm) is satisfied.

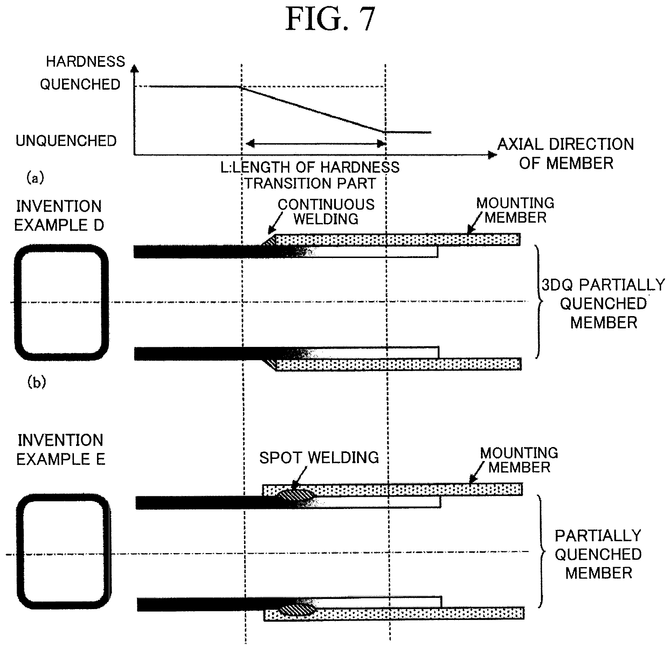

FIG. 7 is an illustration showing a welding part of the structural member 1 according to the present invention and another structural member (mounting member), FIG. 7(a) shows a case in which welding is continuous welding, and FIG. 7(b) shows a case in which welding is resistance spot welding.

When the structural member 1 is welded to another structural member by carrying out continuous welding such as arc welding or laser welding in the quenched part of the structural member 1 or by carrying out spot welding such as resistance spot welding, depending on the welding conditions, due to softening of a heat affected zone (HAZ), strain is concentrated in the softened heat affected zone and there is a growing risk of the structural member 1 being broken when a collision load is applied to the structural member 1.

Therefore, as shown in Invention Example D shown in FIG. 7(a) and Invention Example E shown in FIG. 7(b), it is possible to reduce the difference in strength with the HAZ-softened part by carrying out welding within a range of the length L of the transition part, and preferably within a range of obtaining a lower hardness. Therefore, strain concentration can be relatively released and the possibility of breaking can be reduced. In addition, since the strength of the transition part is higher than the strength of the base metal hardness part, it is possible to increase the strength of a part superimposed with the mounting member.

[Brief Description of the Reference Symbols]

1: STRUCTURAL MEMBER
2: MAIN BODY
3: QUENCHED PART
4: BASE METAL HARDNESS PART
5: TRANSITION PART
6: MEMBER (FEM ANALYSIS MODEL)
7: QUENCHED PART
8: BASE METAL HARDNESS PART
9: QUENCHED PART

**Claims**

1. A structural member for an automobile body comprising:

a hollow steel main body having a closed cross section,
wherein the main body includes, in an axial direction, a quenched part which is subjected to quenching, a base metal hardness part which has the same hardness as the hardness of a base metal, and a transition part which is provided between the quenched part and the base metal hardness part in the axial direction and is formed such that strength changes from the strength of the base metal hardness part to the strength of the quenched part, and

in a case in which a cross-sectional area of the main body is A and a moment of inertia of area of the main body is I, a length L of the transition part in the axial direction satisfies the relationship of the following equation (1).

$$0.006 \ (\mathrm{mm}^{-1}) < \mathrm{LA/I} \ \leq \ 0.2 \ (\mathrm{mm}^{-1}) \qquad \ldots \ (1)$$

2. The structural member for an automobile body according to claim 1,
   wherein a tensile strength of the base metal hardness part is 700 MPa or less, and a tensile strength of the quenched part is 1470 MPa or more.

3. The structural member for an automobile body according to claim 1 or 2,
   wherein respective hardness distributions of the quenched part, the base metal hardness part, and the transition part in the vertical cross section to the axial direction are substantially constant.

4. The structural member for an automobile body according to any one of claims 1 to 3, further comprising:

   a to-be welded part which is provided in the base metal hardness part or the transition part and is to be welded to another structural member for an automobile body.

5. The structural member for an automobile body according to any one of claims 1 to 4,
   wherein in the main body, the closed cross section of the main body is free of an outwardly-extending flange.

# FIG. 1

(a)

(b)

# FIG. 2

(a)

UPPER DIRECTION
OF VEHICLE

FRONT
DIRECTION
OF VEHICLE

(b)

UPPER DIRECTION
OF VEHICLE

FRONT
DIRECTION
OF VEHICLE

(c)

CONSTANT VELOCITY 16km/h

UPPER DIRECTION
OF VEHICLE

FRONT
DIRECTION
OF VEHICLE

6

7        8        A        9

FIXED
BOUNDARY
CONDITION

A'

70        160        70

300

# FIG. 3

(a)                    (b)                    (c)

UPPER DIRECTION
OF VEHICLE

TRANSVERSE
DIRECTION
OF VEHICLE

UPPER DIRECTION
OF VEHICLE

TRANSVERSE
DIRECTION
OF VEHICLE

UPPER DIRECTION
OF VEHICLE

TRANSVERSE
DIRECTION
OF VEHICLE

# FIG. 4

LENGTH OF MEMBER IN AXIAL DIRECTION

# FIG. 5

(a)

X:AXIAL DIRECTION OF MEMBER
Y:WIDTH DIRECTION OF VEHICLE
Z:HEIGHT DIRECTION OF VEHICLE

(b)

(c)

# FIG. 6

□(a)-1-1.2t     ■(a)-1-1.6t     ▣(a)-2-1.2t     ◪(a)-2-1.6t     ▦(a)-2-2.0t

○(b)-1-1.2t     ●(b)-1-1.6t     ○(b)-2-1.2t     ◑(b)-2-1.6t     ◐(b)-2-2.0t

△(c)-1-1.2t     ▲(c)-1-1.6t     △(c)-2-1.2t     ▲(c)-2-1.6t     ▲(c)-2-2.0t

# FIG. 7

HARDNESS
QUENCHED

UNQUENCHED

AXIAL DIRECTION
OF MEMBER

(a)

L:LENGTH OF HARDNESS
TRANSITION PART

INVENTION
EXAMPLE D

CONTINUOUS
WELDING

MOUNTING
MEMBER

3DQ PARTIALLY
QUENCHED
MEMBER

(b)

INVENTION
EXAMPLE E

SPOT WELDING

MOUNTING
MEMBER

PARTIALLY
QUENCHED
MEMBER

## INTERNATIONAL SEARCH REPORT

| International application No. |
| --- |
| PCT/JP2015/066768 |

A.   CLASSIFICATION OF SUBJECT MATTER
*B62D25/20*(2006.01)i, *B62D25/04*(2006.01)i

According to International Patent Classification (IPC) or to both national classification and IPC

B.   FIELDS SEARCHED

Minimum documentation searched (classification system followed by classification symbols)
B62D25/20, B62D25/04

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2014-51117 A  (Toyoda Iron Works Co., Ltd.), 20 March 2014 (20.03.2014), paragraphs [0022], [0030], [0037] (Family: none) | 1-5 |
| A | CD-ROM of the specification and drawings annexed to the request of Japanese Utility Model Application No. 23567/1992(Laid-open No. 74928/1993) (Nissan Shatai Co., Ltd.), 12 October 1993 (12.10.1993), paragraphs [0007] to [0008] (Family: none) | 1-5 |

☒  Further documents are listed in the continuation of Box C.          ☐   See patent family annex.

| | |
| --- | --- |
| * Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>12 August 2015 (12.08.15) | Date of mailing of the international search report<br>25 August 2015 (25.08.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/066768

C (Continuation).　DOCUMENTS CONSIDERED TO BE RELEVANT

| Category* | Citation of document, with indication, where appropriate, of the relevant passages | Relevant to claim No. |
|---|---|---|
| A | WO 2008/123506 A1　(Sumitomo Metal Industries, Ltd.),<br>16 October 2008 (16.10.2008),<br>paragraphs [0172] to [0174]<br>& JP 2012-144253 A　　　& JP 2012-188115 A<br>& JP 2013-52871 A　　　& US 2010/0084892 A1<br>& US 2012/0267919 A1　& US 2014/0008937 A1<br>& WO 2008/123506 A1　& EP 2143621 A1<br>& EP 2517949 A1　　　& EP 2517950 A1<br>& EP 2522563 A1　　　& EP 2527233 A1<br>& CA 2683405 A1　　　& KR 10-2009-0130099 A<br>& CN 101678864 A　　　& MX 2009010753 A<br>& EA 200970927 A1　　& AU 2008235843 A1<br>& AU 2011202254 A1　& AU 2011202255 A1<br>& KR 10-2012-0091395 A　& BR PI 0810638 A2<br>& ZA 200906904 A　　　& CA 2770483 A1<br>& CA 2770506 A1　　　& PT 2143621 E<br>& KR 10-2012-0091394 A　& KR 10-2012-0091396 A<br>& ES 2388656 T3　　　& CN 102941880 A<br>& CN 103101576 A　　　& ES 2452923 T3<br>& PT 2517949 E　　　& ES 2477569 T3<br>& ES 2481443 T3　　　& ES 2481444 T3<br>& PT 2517950 E　　　& PT 2522563 E<br>& PT 2527233 E | 1-5 |

Form PCT/ISA/210 (continuation of second sheet) (July 2009)

**REFERENCES CITED IN THE DESCRIPTION**

**Patent documents cited in the description**

- JP H1017933 B
- JP 2003048567 A
- JP 2004323967 A
- JP 2012131326 A
- JP 2007083304 A
- JP 2012025335 A